# EUROPEAN PATENT APPLICATION

(11) **EP 1 369 152 A2**
(43) Date of publication of application: **10.12.2003**
(21) Application number: 03009339.7
(22) Date of filing: 24.04.2003
(51) Int. Cl.: A63F 13/02

(54) **DVD-Enabling code server and loader for a console-based gaming system**

(30) Priority: 05.06.2002 US 163949
(71) Applicant: MICROSOFT CORPORATION, Redmond, Washington 98052-6399 (US)
(72) Inventor: Dernis, Mitchell S., Seattle, Washington 98115 (US); Chanbai, Sakphong, Redmond, Washington 98053 (US); Gordon, Gary L., Redmond, Washington 98074 (US)
(74) Representative: Grünecker, Kinkeldey, Stockmair & Schwanhäusser Anwaltssozietät

(57) **Abstract**

A peripheral dongle is attachable to a console-based gaming system to facilitate playback of DVD movies on the gaming system. The dongle stores the DVD playback code. The gaming system executes software that facilitates transfer of the code from the dongle to the gaming system. The software utilizes a high-level bus protocol to support the transfer over a Universal Serial Bus (USB) and exposes an application program interface to enable calls into the protocol.

## Description

### TECHNICAL FIELD

This invention relates to console-based gaming systems, and more particularly, to software that enables download of enhancement code from peripheral devices to the console-based gaming systems.

### BACKGROUND

Video games for console-based gaming systems are distributed on optical disks. The game consoles are equipped with an optical disk drive to play such video game disks. With some modifications, the gaming systems can be configured to read optical disks that contain other forms of content besides games, such as audio CDs (compact disks) and movie DVD (digital video disk) movies. The following disclosure addresses one way to implement playback of DVD movies on a console-based gaming system.

### SUMMARY

A peripheral dongle is attachable to a console-based gaming system to facilitate playback of DVD movies on the gaming system. The dongle stores the DVD playback code. The gaming system executes software that facilitates transfer of the code from the dongle to the gaming system. The software utilizes a high-level bus protocol to support the transfer over a Universal Serial Bus (USB) and exposes an application program interface to enable calls into the protocol.

### BRIEF DESCRIPTION OF THE DRAWINGS

Fig. 1 illustrates a gaming system with a game console, one or more controllers, and an attachable dongle that enables DVD playback.
Fig. 2 is a block diagram of the gaming system.
Fig. 3 shows a front elevation view of the dongle.
Fig. 4 shows a side elevation view of the dongle.
Fig. 5 shows a back perspective view of the dongle.
Fig. 6 is a block diagram of the dongle.
Fig. 7 illustrates how the dongle interfaces with the game console.
Fig. 8 is a flow diagram of a startup process for initiating DVD playback on the gaming system.
Fig. 9 is a flow diagram of a process for downloading DVD playback code from the dongle to the game console every time the dongle is attached.
Fig. 10 is a flow diagram of a process for downloading DVD playback code from the dongle to the game console when the dongle is attached the first time, and then validating the code with each subsequent attachment.

### DETAILED DESCRIPTION

This following discussion generally concerns a flexible technique for upgrading consumer electronics devices with upgrade features made available via peripherals that can be added onto the devices. The peripheral stores the code and when connected to the consumer electronics device, downloads the code to the consumer electronics device to add capability. This added capability can then be exploited by the peripheral. For discussion purposes, the technique is described in the context of a peripheral dongle for a console-based gaming system.

### Gaming System

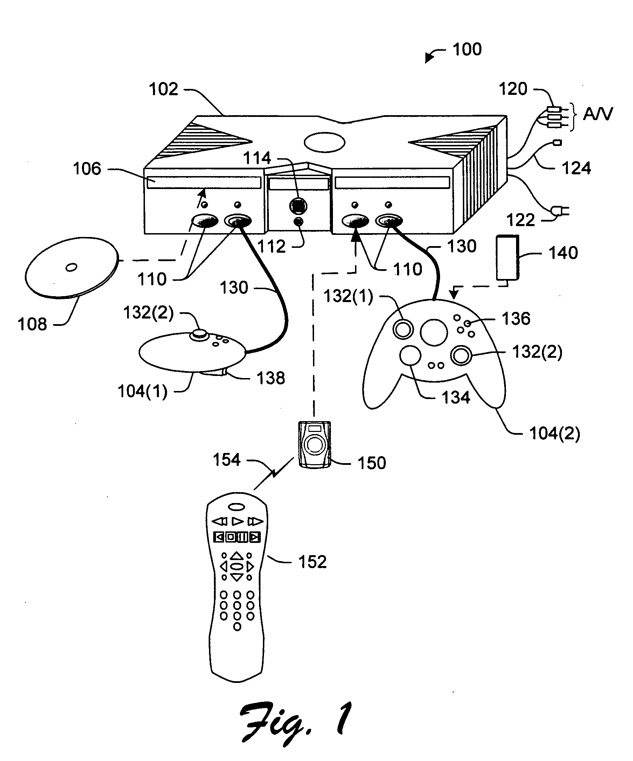

Fig. 1 shows an exemplary gaming system 100. It includes a game console 102 and one or more controllers, as represented by controllers 104(1) and 104(2). The game console 102 is equipped with an internal hard disk drive and a portable media drive 106. The portable media drive 106 supports various forms of portable storage media as represented by optical storage disc 108. Examples of suitable portable storage media include DVD, CD-ROM, game discs, game cartridges, and so forth.

The game console 102 has four slots 110 on its front face to support up to four controllers, although the number and arrangement of slots may be modified. A power button 112 and an eject button 114 are also positioned on the front face of the game console 102. The power button 112 switches power to the game console and the eject button 114 alternately opens and closes a tray of the portable media drive 106 to allow insertion and extraction of the storage disc 108.

The game console 102 connects to a television or other display (not shown) via A/V interfacing cables 120. A power cable 122 provides power to the game console. The game console 102 may further be equipped with internal or externally added network capabilities, as represented by the cable or modem connector 124 to facilitate access to a network, such as a local area network (LAN) or the Internet.

Each controller 104 is coupled to the game console 102 via a wire or wireless interface. In the illustrated implementation, the controllers are USB (Universal Serial Bus) compatible and are connected to the console 102 via serial cables 130. The controller 102 may be equipped with any of a wide variety of user interaction mechanisms. As illustrated in Fig. 1, each controller 104 is equipped with two thumbsticks 132(1) and 132(2), a D-pad 134, buttons 136, and two triggers 138. These mechanisms are merely representative, and other known gaming mechanisms may be substituted for or added to those shown in Fig. 1.

A memory unit (MU) 140 may be inserted into the controller 104 to provide additional and portable storage. Portable memory units enable users to store game parameters and transport them for play on other consoles. In the described implementation, each controller is configured to accommodate two memory units 140, although more or less than two units may be employed in other implementations.

A dongle 150 is provided to enable DVD movie playback capability. The dongle 150 has a compatible connector that allows the dongle to be inserted into one of the slots 110. The dongle connector is thus similar in shape to the connectors on the game controllers 104. The dongle 150 stores DVD playback code that enables program decoding and playback of DVD video movies. Upon connecting the dongle 150 to the console, the DVD playback code residing on the dongle is downloaded to the console to enable movie playback capability. The dongle 150 also has an IR receiver to receive commands from a remote control 152 over wireless link 154.

The dongle is thus capable of performing three separate functions. It stores the DVD playback code that, when downloaded to the game console, facilitates playing of DVD movies on the gaming system. The dongle also supports an IR receiver/decoder to accept common DVD commands from a remote control. Thirdly, the dongle acts as a playback enabler, in that the game console verifies that an authentic dongle is inserted before permitting DVD playback.

While the dongle is described as storing DVD playback code, it may be used to store code that enables other functionality of the game console. For instance, the dongle may be used as an IR receiver that enables the remote control 152, or other IR-enabled remote device, to exploit the added functionality of the game console that would not otherwise be available in the absence of the dongle.

The gaming system 100 is thus capable of playing games and music, and with the dongle 150 attached, DVD video movies. With the different storage offerings, titles can be played from the hard disk drive or the portable medium 108 in drive 106, from an online source, or from a memory unit 140. A sample of what the gaming system 100 is capable of playing back includes:
1. Game titles played from CD and DVD discs, from the hard disk drive, or from an online source.
2. Digital music played from a CD in the portable media drive 106, from a compressed file on the hard disk drive (e.g., Windows Media Audio (WMA) format), or from online streaming sources.
3. Movies played from a DVD disc in the portable media drive 106, from a file on the hard disk drive (e.g., Windows Media Video (WMV) format), or from online streaming sources.

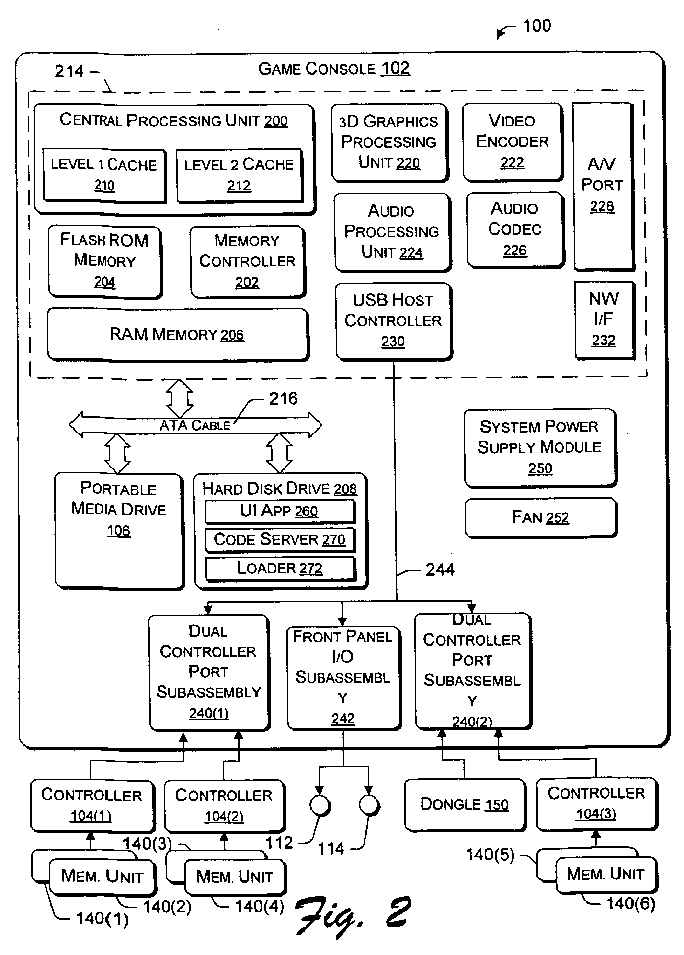

Fig. 2 shows functional components of the gaming system 100 in more detail. The game console 102 has a central processing unit (CPU) 200 and a memory controller 202 that facilitates processor access to various types of memory, including a flash ROM (Read Only Memory) 204, a RAM (Random Access Memory) 206, a hard disk drive 208, and the portable media drive 106. The CPU 200 is equipped with a level 1 cache 210 and a level 2 cache 212 to temporarily store data and hence reduce the number of memory access cycles, thereby improving processing speed and throughput.

The CPU 200, memory controller 202, and various memory devices are interconnected via one or more buses, including serial and parallel buses, a memory bus, a peripheral bus, and a processor or local bus using any of a variety of bus architectures. By way of example, such architectures can include an Industry Standard Architecture (ISA) bus, a Micro Channel Architecture (MCA) bus, an Enhanced ISA (EISA) bus, a Video Electronics Standards Association (VESA) local bus, a Peripheral Component Interconnect (PCI) bus, and a Lightning Data Transport (LDT) bus.

As one suitable implementation, the CPU 200, memory controller 202, ROM 204, and RAM 206 are integrated onto a common module 214. In this implementation, ROM 204 is configured as a flash ROM that is connected to the memory controller 202 via a PCI (Peripheral Component Interconnect) bus and a ROM bus (neither of which are shown). RAM 206 is configured as multiple DDR SDRAM (Double Data Rate Synchronous Dynamic RAM) modules that are independently controlled by the memory controller 202 via separate buses (not shown). The hard disk drive 208 and portable media drive 106 are connected to the memory controller via the PCI bus and an ATA (AT Attachment) bus 216.

A 3D graphics processing unit 220 and a video encoder 222 form a video processing pipeline for high speed and high resolution graphics processing. Data is carried from the graphics processing unit 220 to the video encoder 222 via a digital video bus (not shown). An audio processing unit 224 and an audio codec (coder/decoder) 226 form a corresponding audio processing pipeline with high fidelity and stereo processing. Audio data is carried between the audio processing unit 224 and the audio codec 226 via a communication link (not shown). The video and audio processing pipelines output data to an A/V (audio/video) port 228 for transmission to the television or other display. In the illustrated implementation, the video and audio processing components 220-228 are mounted on the module 214.

Also implemented on the module 214 are a USB host controller 230 and a network interface 232. The USB host controller 230 is coupled to the CPU 200 and the memory controller 202 via a bus (e.g., PCI bus) and serves as host for the peripheral controllers 104(1)-104(3) and dongle 150. The network interface 232 provides access to a network (e.g., LAN, Internet, etc.) and may be any of a wide variety of various wired or wireless interface components including an Ethernet card, a modem, a Bluetooth module, a cable modem, and the like.

The game console 102 has two dual controller support subassemblies 240(1) and 240(2), with each subassembly supporting up to two game controllers and/or the DVD enabling dongle. In this illustration, two game controllers 104(1) and 104(2) are connected to the first controller support subassembly 240(1) and a third game controller 104(3) and the dongle 150 are connected to the second subassembly 240(2). A front panel I/O subassembly 242 supports the functionality of the power button 112 and the eject button 114, as well as any LEDs (light emitting diodes) or other indicators exposed on the outer surface of the game console. The subassemblies 240(1), 240(2), and 242 are coupled to the module 214 via one or more cable assemblies 244.

Six memory units 140(1)-140(6) are illustrated as being connectable to the three controllers 104(1)-104(3), i.e., two memory units for each controller. Each memory unit 140 offers additional storage on which games, game parameters, and other data may be stored. When inserted into a controller, the memory unit 140 can be accessed by the memory controller 202.

A system power supply module 250 provides power to the components of the gaming system 100. A fan 252 cools the circuitry within the game console 102.

The game console 102 implements a cryptography engine to perform common cryptographic functions, such as encryption, decryption, authentication, digital signing, hashing, and the like. The cryptography engine may be implemented as part of the CPU 200, or in software stored in memory (e.g., ROM 204, hard disk drive 208) that executes on the CPU, so that the CPU is configured to perform the cryptographic functions.

A console user interface (UI) application 260 is stored on the hard disk drive 208. When the game console is powered on, various portions of the console application 260 are loaded into RAM 206 and/or caches 210, 212 and executed on the CPU 200. The console application 260 presents a graphical user interface that provides a consistent user experience when navigating to different media types available on the game console.

Code server software 270 and loader software 272 are also provided to facilitate downloading of the DVD playback code from the dongle 150 to the game console 102. The software is shown stored on hard disk drive 208, although it may be stored in other memory, such as ROM 204. In one implementation, the code server 270 is embodied as a software driver that exposes a set of application program interfaces (APIs) that may be called to retrieve and load the DVD playback code stored on the dongle 150. Since the playback code can be stored in a pre-encrypted format, the loader 272 communicates with the code server driver 270 to decrypt the DVD playback code directly into memory, such as RAM 206 or hard disk drive 208. The code server and loader software and an example set of APIs are described below in more detail.

### Exemplary Dongle

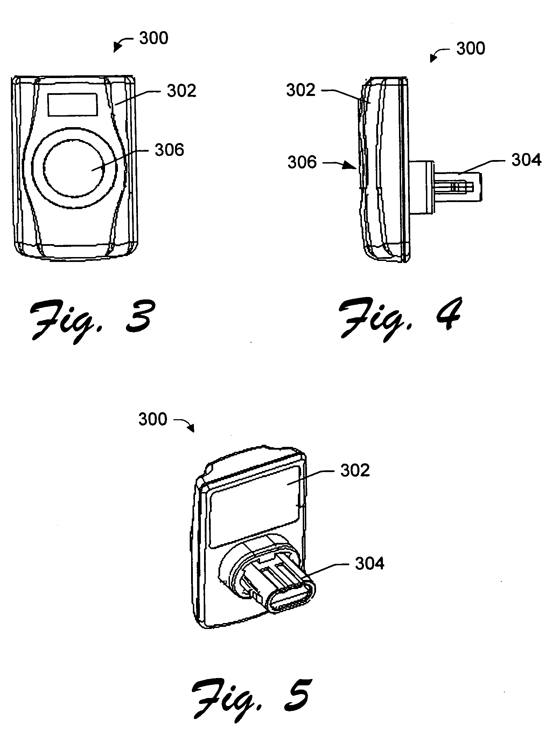

Figs. 3-5 show one exemplary implementation of the dongle 150. The dongle 150 has a main body 302 and a connector member 304 extending from the body 302. In the described implementation, the connector member 304 is a USB compatible connector configured for insertion into any one of the four slots 110 on the face of the game console (see Fig. 1). One connector shape is illustrated, but other shapes are possible depending upon the design selection and the configuration of the game console slot.

The viewer controls DVD operation on the gaming system using the remote control 152 (Fig. 1). The commands are transmitted to the dongle 150 as infrared signals. An IR lens 306 is mounted in, but exposed externally of the body 302 to receive the infrared signals from the remote control handset 152. The IR lens 306 is mounted on an opposite side of the body from the connector member 304, so that when the connector member 304 is inserted into a slot 110, the IR lens 306 faces outward to capture IR signals from the remote control 152.

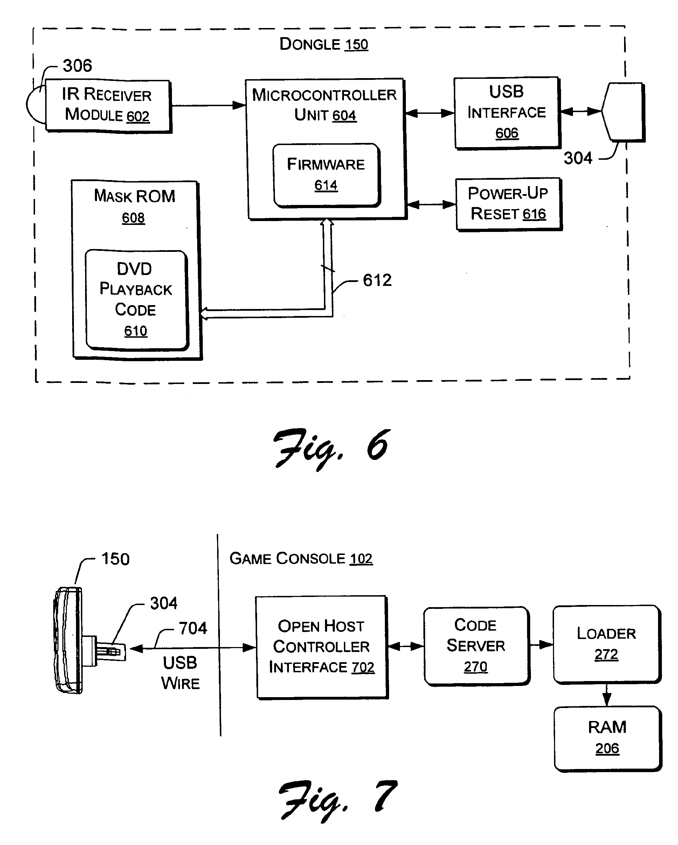

Fig. 6 shows one exemplary arrangement of components housed within the dongle 150. In one implementation, the components are integrated on an internal PCB (printed circuit board) assembly that is housed and protected within the plastic encasing of the dongle body 302. An IR receiver 602 is coupled to the IR lens 306 to receive the infrared signals and decode them into remote control codes. As one possible implementation, the IR receiver and decoder 602 may support standard RCA DVD remote control codes so that the dongle 150 is compatible with most universal remote controls.

A microcontroller unit 604 is coupled to the IR receiver 602 to receive and operate on the control codes entered by the viewer. The microcontroller 604 is coupled to a USB interface 606, which facilitates data I/O through the connector 304 when the dongle 150 is plugged into the game console. Additionally, power is delivered from the game console to the dongle via the USB interface 606 when the dongle 150 is inserted and the game console is powered on.

The dongle 150 further includes a read only memory (ROM) 608 to store DVD playback code 610 that facilitates playback of movies and other content from a DVD. The ROM 608 can be implemented as a mask ROM (as illustrated), a flash ROM, or other types of ROM. The playback code 610 is stored as a pre-encrypted ROM image consisting of multiple accessible pages. Each page is a predefined size (e.g., 1 Kbyte). The ROM 608 is coupled to the microcontroller 604 via bus 612, which has multiple data lines (e.g., 8 data lines) and multiple address lines (e.g., 20 address lines). The microcontroller 604 can specify individual pages using the address lines of bus 612, and the retrieved code is passed out over the data lines of the bus.

The microcontroller 604 executes firmware 614 to facilitate downloading of the DVD playback code 610 from the ROM 608, through the USB interface 606, and to the game console 102. A power-up reset 616 executes each time the dongle is initially plugged into an active game console, or each time the game console is powered on. The power-up reset 616 resets the microcontroller 604 to begin executing firmware 614.

By maintaining the code 610 in ROM 608, the dongle 150 effectively stores all of the software capabilities to enable DVD playback on the gaming system. When the console UI application 260 detects DVD movie media, the UI application 260 begins the process of playing a movie. If the dongle 150 is present, the UI application 260 downloads the DVD playback code 610 to the game console RAM memory 206, where the code is installed without user interaction. Then, the UI application 260 operates as a DVD player, receiving standard user commands (e.g. play, pause, forward, reverse, skip, etc.) from a remote control handset. If the dongle 150 is not present, the download of the DVD playback code 610 fails, and the UI application 260 displays a message indicating that the dongle 150 is required to play DVD movies.

The dongle 150 may also be configured to function as a playback enabler. When a viewer loads a movie DVD into the tray, the game console first checks if an authenticable dongle 150 is inserted into a port 110. In this mode, the game console would already have a stored copy of the DVD playback code 610. Small random sections of the DVD playback code 610 would be downloaded and compared to the copy already present on the game console hard disk drive 208. If a dongle is not installed, or a device that cannot be authenticated as the dongle 150 is installed, the DVD movie playback function is inhibited and not available to the viewer. Whether or not the dongle 150 is used for downloading code or simply enabling it, when the dongle 150 is removed, the UI application 260 disables DVD video functionality.

### Code Server and Loader

The code server and loader software implemented on the game console 102 facilitates download of the DVD playback code 610 from the dongle 150 to the game console. Generally, the code server 270 is responsible for obtaining the playback code 610 over a USB connection from the dongle. The code server uses a high-level bus protocol for requesting the code and moving it across a USB wire. The loader is responsible for decrypting the pre-encrypted DVD playback code 610 into memory. The loader also resolves dependencies, akin to a DLL (dynamic linked library) loader.

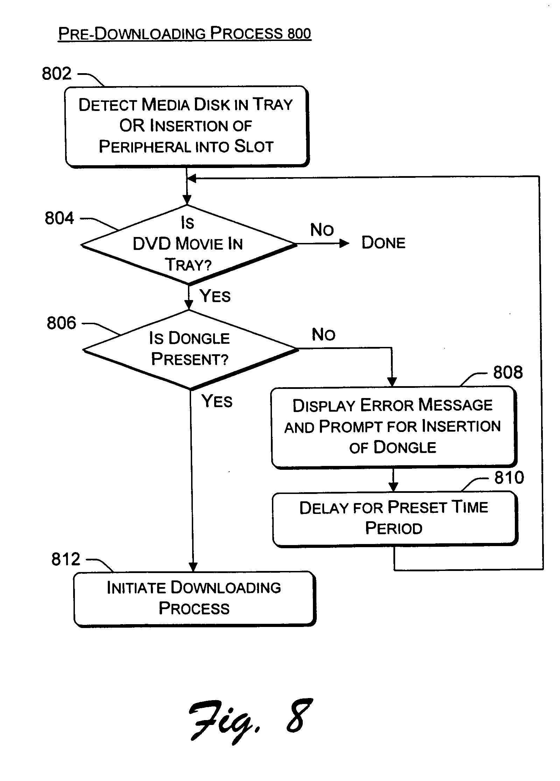

Fig. 7 illustrates one particular implementation of the code server 270 and loader 272 when the dongle 150 is plugged into a slot on the game console 102. The code server 270 implements a high-level bus protocol on top of a conventional OHCI/USB protocol. Accordingly, the code server is shown coupled to an open host controller interface (OHCI) 702, which in turn is connected to a USB wire 704.

When the dongle 150 is inserted, the connector member 304 connects to a USB wire 704. The coder server 270 gets the DVD playback code 610 from the ROM 608, using either synchronous or asynchronous transfer techniques, and provides the code to the loader 272. The loader 272 decrypts the code as it is received and stores the code in the console memory. In one implementation, the DVD playback code is temporarily stored in RAM 206 to facilitate DVD movie playback. When the gaming system is powered "off", the code is lost. In an alternative implementation, the code may be stored on the hard disk drive 208. Both implementations are described below in more detail.

The high-level bus protocol supported by the code server 270 is based on two commands:
- XDCS_REQUEST_GET_ROM_FILE_INFO; and
- XDCS_REQUEST_GET_ROM_FILE_BLOCK.

Both requests are control requests. The XDCS_REQUEST_GET_ROM_FILE_INFO command allows the retrieval of the code version and size of the code image. In response to this command, the dongle firmware 614 reads the version and length from the start of the ROM image stored in ROM 608.

The XDCS_REQUEST_GET_ROM_FILE_BLOCK command allows access to any pre-sized block of code within the ROM image stored in ROM 608. With an image constructed in 1Kbyte pages, for example, the command permits access to individual 1Kbyte pages of code. In response to this command, the dongle firmware 614 shifts the block index to obtain the data offset and the requested length of bytes are returned from that offset.

One exemplary layout of the SETUP packet for the two protocol commands is as follows:

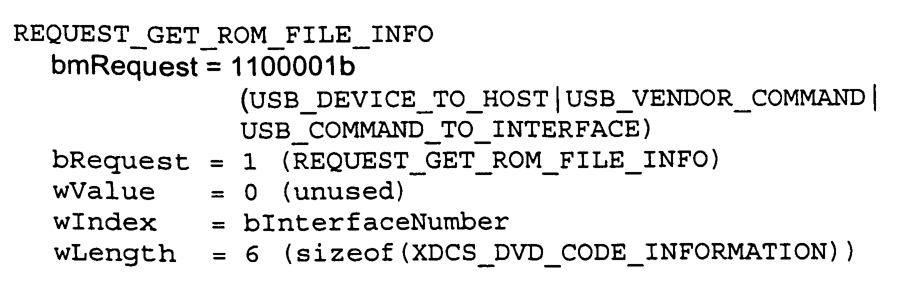

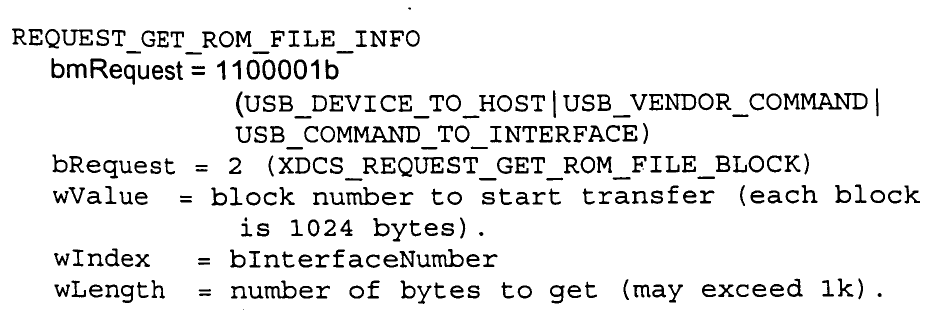

The two command protocol is very efficient and extremely fast. With the OHCI USB system and an optimized USB stack, the protocol facilitates data transfer at rates of approximately one Mbyte per second. At 1K block sizes, the 8-byte SETUP packet and status packet are trivial.

The code server 270 provides a stateless retrieval mechanism that can be used to download the entire contents, or it can retrieve individual portions for spot checking contents. The protocol could be used for random access to read-only storage on hardware platforms that use the Open Host Controller standard.

The code server 270 also exposes a stateless API for obtaining code images from the dongle. The API provides access to the ROM size and version, and facilitates synchronous or asynchronous delivery of any or all of the DVD playback code 610 into a buffer. In the synchronous mode, the caller requests selected bytes of the code 610 and waits for the bytes to arrive. This mode blocks operation until the requested code is downloaded or until an error occurs. In the asynchronous mode, the hardware does the work with infrequent interrupts. Operation of the main software thread can continue performing other tasks while waiting for the download complete.

One implementation of the code server API defines three interfaces. The first interface, named "XDCSGetInformation", is called to obtain the size and version of the DVD playback code 610. The second interface, named "XDCSDownloadCode", is called to download the code from dongle 150 using the synchronous mode. The third interface, named "XDCSDownloadCodeAsync", is called to download the code from the dongle 150 using the asynchronous mode.

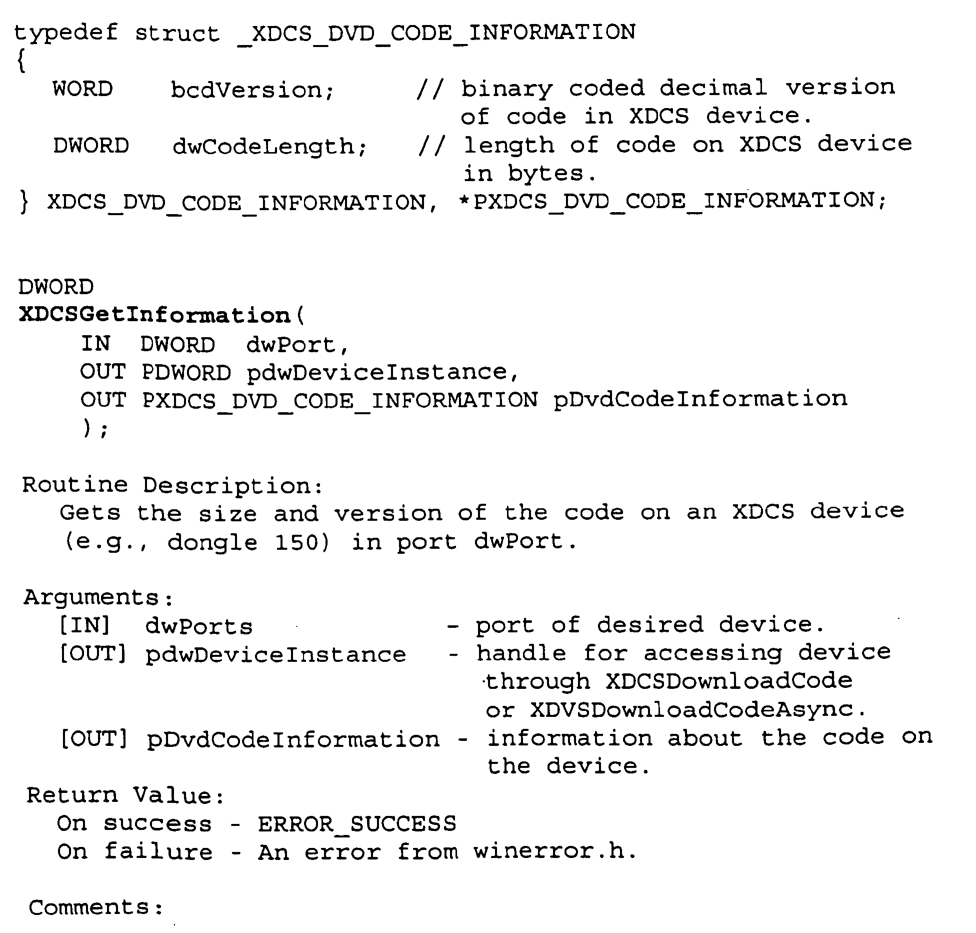

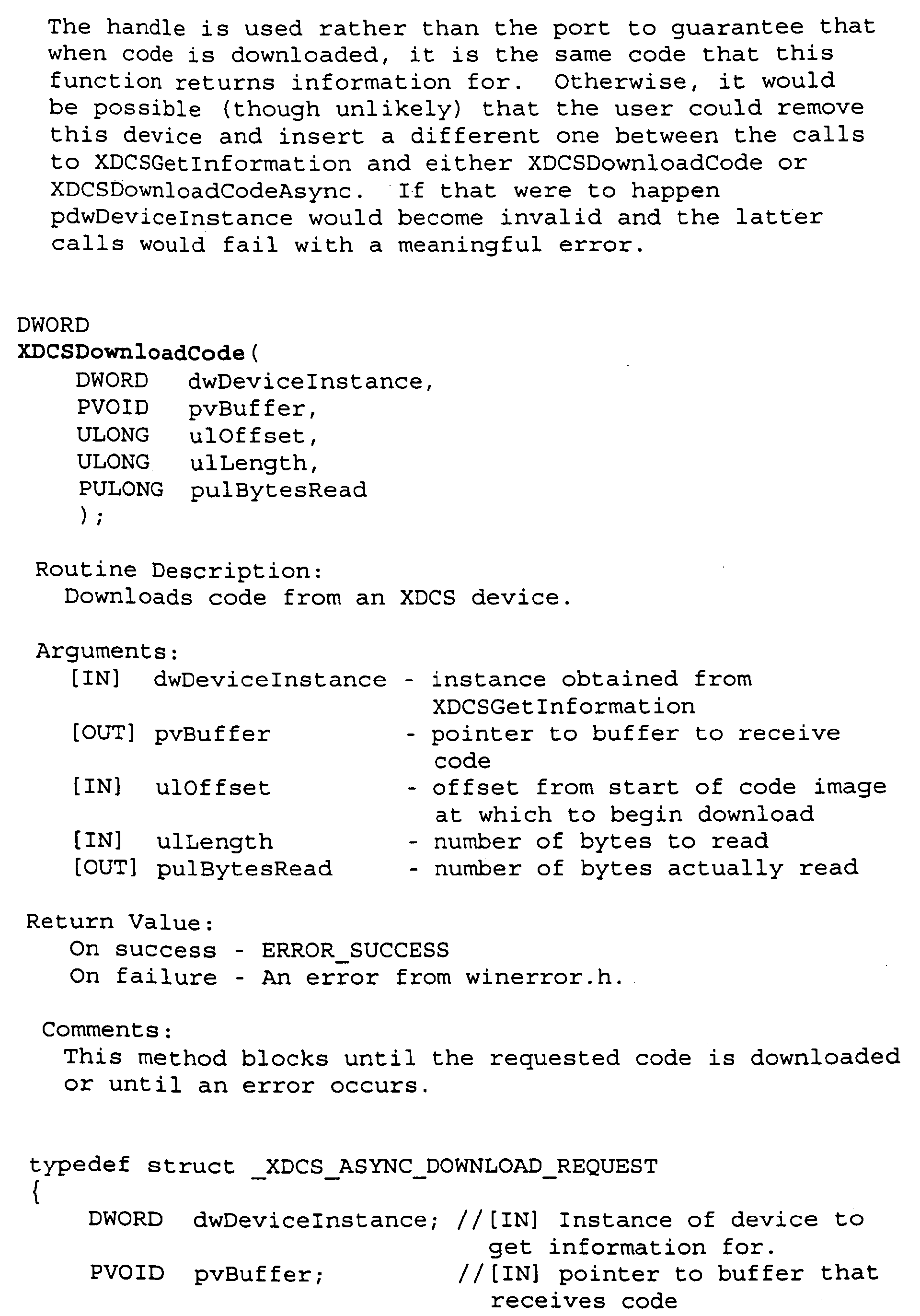

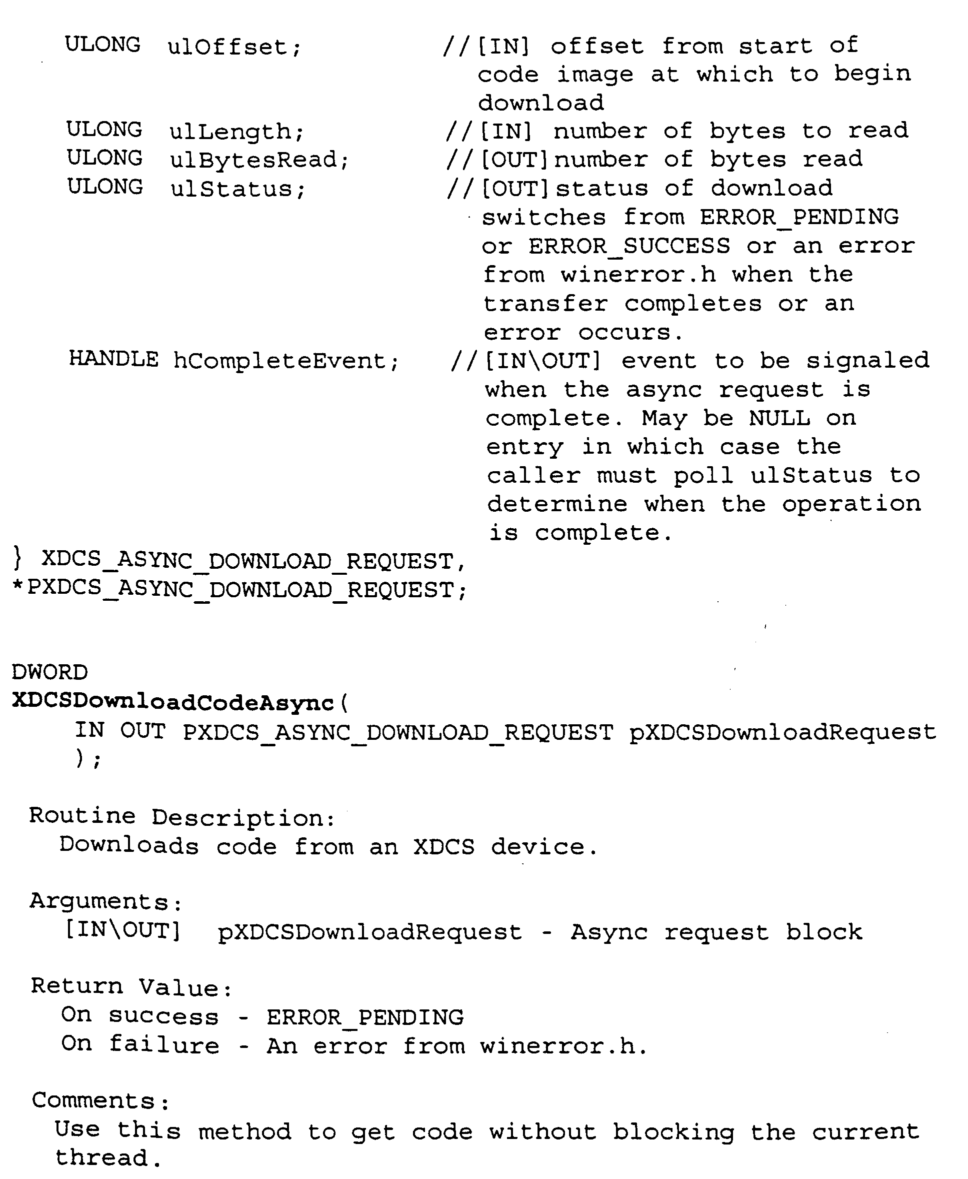

### Operation

Fig. 8 shows a startup process 800 for initiating DVD playback on the gaming system 100. The process will be described with reference to the implementation of the dongle and game console described in Figs. 2, 6, and 7. The process 800 can be implemented in software, firmware, and/or hardware. In the case of software and firmware, process 800 represents a set of operations that may be implemented as computer-executable instructions that can be executed by one or more processors.

At block 802, the process begins when either the user loads an optical media disk into the tray of the game console or when the viewer plugs the dongle 150 into a slot 110. Once the process 800 begins, two conditions are checked. At block 804, the game console determines whether the media disk in the tray is a DVD movie. The media disk may contain other content, such as an audio CD or a game disk. If it is not a DVD movie (i.e., the "no" branch from block 804), the process ends.

If the disk is a DVD movie (i.e., the "yes" branch from block 804), the game console determines whether the dongle 150 is attached (block 806). The dongle 150 needs to be inserted into a slot 110 to enable playback of the DVD movie. If it is absent (i.e., the "no" branch from block 806), the game console displays an error message indicating that the dongle is needed to enable DVD movie playback and prompts the user to insert the dongle (block 808). A short delay follows this message to enable the user to insert the dongle or remove the DVD media (block 810). Following the delay, the process repeats the tests for DVD media in the tray (block 804) and the presence of a dongle (block 806).

Assuming the disk in the tray is a DVD movie (i.e., the "yes" branch from block 804) and the dongle is present (i.e., the "yes" branch from block 806), the game console initiates the downloading process (block 812). There are different ways to implement the process of downloading the DVD-enabling functionality from the dongle 150 to the game console 102. One approach is to download the DVD playback code 610 each time the dongle 150 is plugged into the game console. Another approach is to download DVD playback code 610 when the dongle 150 is inserted for the first time, and then store all or a portion of the playback code in non-volatile memory at the game console 102. The choice of implementation involves certain design considerations and cost tradeoffs. These options will be described below more fully.

### Option 1: Download Each Time

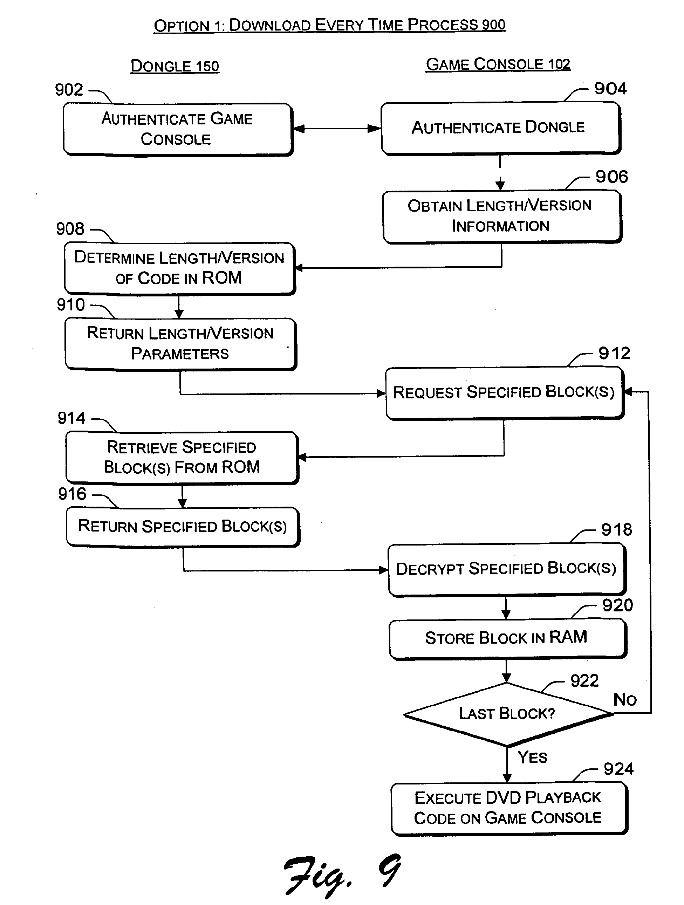

Fig. 9 shows a process 900 for downloading the DVD playback code 610 every time the dongle 150 is inserted into console slot 110. The process will be described with reference to the implementation of the dongle and game console described in Figs. 2, 6, and 7. Where appropriate, the operations are aligned beneath headings to represent which device might perform them. The process 900 can be implemented in software, firmware, and/or hardware.

At blocks 902 and 904, the gaming system may optionally implement an authentication protocol to authenticate the game console and dongle to one another. The game console 102 and dongle 150 exchange keys or other data that enables each component to verify the other's authenticity. The authentication protocol may be based on cryptographic technologies, such as public key exchanges or digital signatures. The authentication may be performed each time the dongle is connected. This authentication is optional. As an alternative, security can be based solely in the game console's ability to authenticate the code stored on the dongle as it is downloaded to the game console. The code is digitally signed and then encrypted with the private portion of a public-private key pair. As the code is downloaded, the game console authenticates the validity of the code as belonging to an authentic dongle by decrypting the code and verifying the signature.

At block 906, the game console obtains length/version information of the DVD playback code 610 stored in ROM 608 of the dongle 150. This can be accomplished by calling the XDCSGetInformation method exposed by the code server 270, which in response issues the REQUEST_GET_ROM_FILE_INFO command to obtain the code version and size of the code image. At block 908, the dongle firmware 614 reads the version and length from the start of the ROM image stored in ROM 608. The dongle passes these parameters back to the game console 102 (block 910).

At block 912, the game console 102 requests one or more specified blocks of the DVD playback code 610. The game console may request all or portions of the code. This request may be performed by calling one of the methods, XDCSDownloadCode or XDCSDownloadCodeAsync, depending upon whether synchronous or asynchronous downloading is preferred. In response to this call, the code server 270 issues the XDCS_REQUEST_GET_ROM_FILE_BLOCK command to access any pre-sized block of code within the ROM image stored in ROM 608. At blocks 914 and 916, the dongle firmware 614 retrieves the specified block(s) and returns those blocks to the game console.

At block 918, the loader 272 decrypts the block(s) as they are received at the game console. The loader 272 may further verify any digital signatures on the code to confirm that the code is authentic. The decrypted blocks are stored in volatile RAM 206 (block 920). At block 922, the game console determines whether all of the desired blocks have been downloaded from the dongle. If not (i.e., the "no" branch from block 922), the game console requests one or more additional blocks.

If all blocks have been downloaded (i.e., the "yes" branch from block 922), the game console executes the DVD playback code stored in RAM 206. On execution, the game console presents a movie playback user interface (UI) that allows the viewer to control operation of the game console as if it were a DVD player.

### Option 2: Download Once and Store

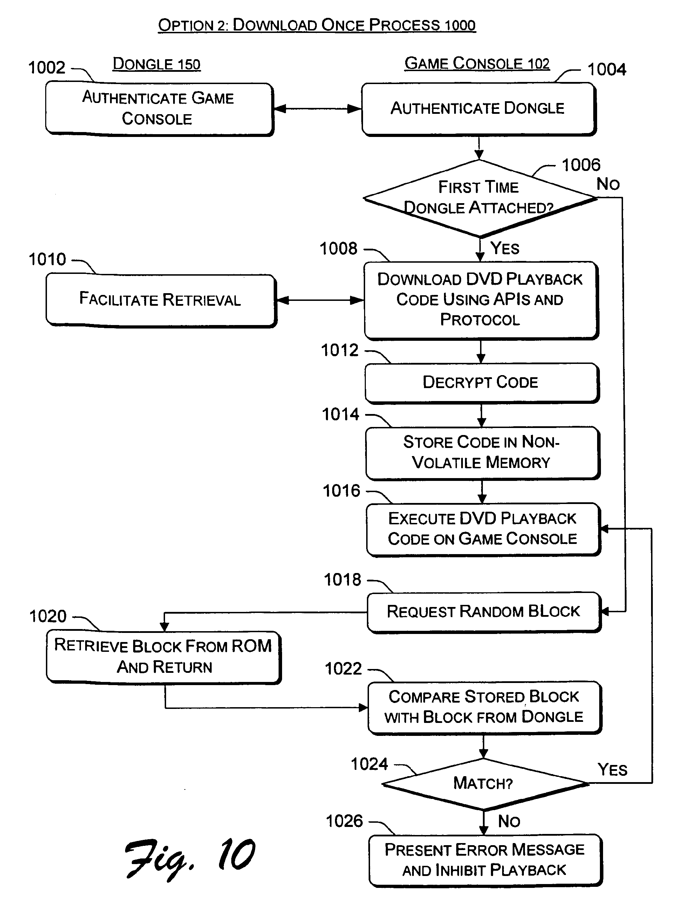

Fig. 10 shows a process 1000 for downloading the DVD playback code 610 the first time the dongle 150 is inserted into console slot 110, and storing the code in non-volatile memory in the game console. Where appropriate, the operations are aligned beneath headings to represent which device might perform them. The process 1000 can be implemented in software, firmware, and/or hardware.

At blocks 1002 and 1004, the gaming system may optionally implement an authentication protocol to authenticate the game console and dongle to one another. At block 1006, the game console determines whether this is the first time the dongle 150 has been inserted into the game console. If it is (i.e., the "yes" branch from block 1006), the game console downloads the DVD playback code 610 from the dongle 150 (blocks 1008 and 1010). This downloading may be accomplished using the APIs and two-command protocol, as described above as blocks 906-916 in Fig. 9.

As the code is received, the loader 272 decrypts the code (block 1012) and permanently stores the code in non-volatile memory, such as in a partitioned region on hard disk drive 208 (block 1014). At block 1016, the game console executes the DVD playback code stored in non-volatile memory to enable playback of the DVD movie. If the dongle is removed, the code remains stored at the game console.

With reference again to block 1006, if the dongle is subsequently reattached and thus the attachment is no longer the first time (i.e., the "no" branch from block 1006), the game console requests a randomly selected block of code from the dongle (block 1018). The dongle firmware retrieves the block and returns it to the game console (block 1020). The game console compares the retrieved block with the same block stored in non-volatile memory. If the two match (i.e., the "yes" branch from block 1024), the code and dongle are verified. The game console then executes the DVD playback code stored in non-volatile memory to enable playback of the DVD movie (block 1016). If the code portions fail to match (i.e., the "no" branch from block 1024), the game console presents an error message and inhibits playback by not executing the locally stored copy of the DVD playback code.

### Conclusion

Although the invention has been described in language specific to structural features and/or methodological acts, it is to be understood that the invention defined in the appended claims is not necessarily limited to the specific features or acts described. Rather, the specific features and acts are disclosed as exemplary forms of implementing the claimed invention.

## Claims

1. A console-based gaming system, comprising:
a game console having a memory and an optical disk drive to read optical disks;
a dongle separate from, but operably couplable to the game console, the dongle storing DVD playback code to enable DVD playback of a DVD movie loaded in the optical disk drive of the game console; and
software that, when executed on the game console, retrieves the DVD playback code from the dongle and load the DVD playback code in the memory of the game console.

2. A console-based gaming system as recited in claim 1, wherein the memory comprises volatile memory, and the software is stored in the volatile memory.

3. A console-based gaming system as recited in claim 1, wherein the memory comprises non-volatile memory, and the software is permanently stored in the non-volatile memory.

4. A console-based gaming system as recited in claim 1, wherein the dongle couples to the game console via a Universal Serial Bus (USB), and the software facilitates transfer of the DVD playback code across the USB.

5. A console-based gaming system as recited in claim 1, wherein the software is configured to request individual portions of the DVD playback code.

6. A console-based gaming system as recited in claim 1, wherein the software comprises:
a code server to request the DVD playback code from the dongle and facilitate transfer of the DVD playback code across an interface between the dongle and the game console; and
a loader to decrypt the DVD playback code and store the DVD playback code into the memory.

7. A game console for playing games store on optical memory disks, comprising:
an optical disk drive to read optical memory disks;
non-volatile memory;
a processor coupled to the non-volatile memory and the optical disk drive; and
a code server program stored in the memory and executable on the processor, the code server program being configured to request DVD playback code from a peripheral device, when the peripheral device is operably coupled to the game console, and to facilitate transfer of the DVD playback code from the peripheral device to the game console to enable DVD playback on the game console when DVD movies are read by the optical disk drive.

8. A game console as recited in claim 7, wherein the DVD playback code is encrypted, and further comprising a loader program to decrypt the DVD playback code.

9. A game console as recited in claim 7, wherein the DVD playback code is stored in the non-volatile memory.

10. A game console as recited in claim 7, further comprising volatile memory, wherein the DVD playback code is stored in the volatile memory.

11. A game console as recited in claim 7, wherein the code server program exposes an application program interface having methods for performing the following functions:
obtaining a size and version of the DVD playback code;
synchronously transferring the DVD playback code to the game console; and
asynchronously transferring the DVD playback code to the game console.

12. A game console as recited in claim 7, wherein the code server program is configured to request and transfer individual portions of the DVD playback code.

13. A computer-readable medium comprising computer-executable instructions that, when executed by a console-based gaming system, direct the console-based gaming system to:
request DVD playback code from a peripheral attached to the gaming system; and
facilitate transfer of the DVD playback code across an interface between the peripheral and the gaming system.

14. A computer-readable medium as recited in claim 13, further comprising computer-executable instructions that, when executed by a console-based gaming system, direct the console-based gaming system to store the DVD playback code in non-volatile memory.

15. A computer-readable medium as recited in claim 13, further comprising computer-executable instructions that, when executed by a console-based gaming system, direct the console-based gaming system to store the DVD playback code in volatile memory.

16. A computer-readable medium as recited in claim 13, wherein the DVD playback code is pre-encrypted, and further comprising computer-executable instructions that, when executed by a console-based gaming system, direct the console-based gaming system to decrypt the DVD playback code.

17. A computer-readable medium as recited in claim 13, further comprising computer-executable instructions that, when executed by a console-based gaming system, direct the console-based gaming system to authenticate the peripheral.

18. A console-based gaming system comprising:
the computer-readable medium as recited in claim 13; and
a processor to execute the computer-executable instructions.

19. A protocol for transferring code over a Universal Serial Bus (USB) from a peripheral to a host device, comprising:
a first command to retrieve a code version and a size of a code image stored in memory on the peripheral, the code image having pre-sized blocks of code; and
a second command to access one or more of the pre-sized blocks of code and facilitate transfer of the one or more pre-sized blocks of code to the host device.

20. A protocol as recited in claim 19, wherein the first command has a SETUP packet defined as follows:

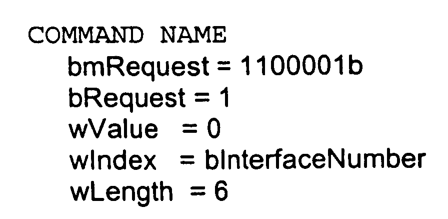

21. A protocol as recited in claim 19, wherein the second command has a SETUP packet defined as follows:

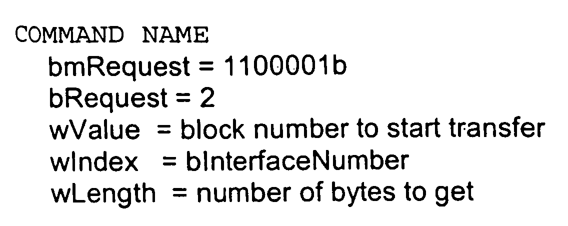

22. An application program interface for use in a console-based gaming system, the application program interface being embodied on a computer-readable medium and having methods for performing the following functions:
obtaining a size and version of DVD playback code stored on a peripheral device operably coupled to the console-based gaming system;
synchronously transferring the DVD playback code to the game console;
asynchronously transferring the DVD playback code to the game console; and
wherein when the DVD playback code is transferred and stored at the console-based gaming system, the console-based gaming system is enabled to perform DVD playback.

23. In a console-based gaming system having a game console and a peripheral device that can be alternatively attached to or detached from the game console, a method comprising:
requesting DVD playback code stored on the peripheral device; and
facilitating transfer of the DVD playback code stored on the peripheral device to the game console; and
executing the DVD playback code at the game console to enable DVD movie playback on the console-based gaming system.

24. A method as recited in claim 23, further comprising utilizing a high-level bus protocol to support the requesting and the facilitating.

25. A method as recited in claim 23, wherein the requesting comprises:
obtaining a size and version of the DVD playback code; and
requesting one or more blocks of the DVD playback code.

26. A method as recited in claim 23, further comprising storing the DVD playback code in volatile memory on the game console.

27. A method as recited in claim 23, further comprising authenticating the peripheral device.

28. A method for operating a console-based gaming system, comprising:
obtaining a size and version of DVD playback code stored on a peripheral device that is operably coupled to the console-based gaming system, the DVD playback code being encrypted;
requesting one or more blocks of the DVD playback code;
receiving the one or more blocks of the DVD playback code;
decrypting the one or more blocks of the DVD playback code;
storing the one or more blocks of DVD playback code; and
executing the DVD playback code.

29. A method as recited in claim 28, wherein the storing comprises storing the DVD playback code in volatile memory.

30. A method as recited in claim 28, further comprising authenticating the peripheral device.

31. In a console-based gaming system having a game console and a peripheral dongle that can be alternatively attached to or detached from the game console, a method comprising:
in response to the peripheral dongle being attached to the game console for a first time,
downloading DVD playback code from the peripheral dongle to the game console;
storing the DVD playback code in non-volatile memory;
executing the DVD playback code to enable playback of DVD
movies on the console-based gaming system;
in response to the peripheral dongle being subsequently attached to the game console after the first time,
retrieving a portion of the DVD playback code stored on the peripheral dongle;
comparing the portion of the DVD playback code with a corresponding portion of the DVD playback code stored in the non-volatile memory; and
in an event that the two portions match, executing the DVD playback code to enable playback of DVD movies on the console-based gaming system.
